# EUROPEAN PATENT APPLICATION

(11) **EP 4 692 761 A1**
(43) Date of publication of application: **11.02.2026**
(21) Application number: 25189321.0
(22) Date of filing: 14.07.2025
(51) Int. Cl.: G01N 21/03, G01N 21/85, G01N 13/00, G02B 6/36

(54) **VARIABLE-PATHLENGTH, FIBER-OPTIC TRANSMISSION PROBE FOR DISSOLUTION TESTING EQUIPMENT AND THE LIKE**

(30) Priority: 02.08.2024 US 202418792725
(71) Applicant: Distek, Inc., North Brunswick, NJ 08902 (US)
(72) Inventor: Nir, Ishai, Hamilton, 08902 (US); Seely, Jeff, Little Silver, 07739 (US); Vrabel, Ryan, Cream Ridge, 08514 (US)
(74) Representative: De Vries & Metman

(57) **Abstract**

A fiber-optic transmission probe system for, for example, dissolution testing, includes a single probe (100), a single probe tip (200), and a number of pathlength adjusters (402, 502) of different lengths. The transmission probe system is usable to assemble different probe assemblies having different, desired optical pathlengths, where each probe assembly has either no pathlength adjuster or a different one of the pathlength adjusters. The probe system avoids the prior-art requirements of having either (i) multiple probes of different, fixed optical pathlengths or (ii) a probe with multiple probe tips of different, fixed lengths to achieve the different, desired optical pathlengths.

## Description

### BACKGROUND

### Field of the Disclosure

The present disclosure relates to fiber-optic transmission probes and, more specifically but not exclusively, to such probes used in dissolution testing equipment.

### Description of the Related Art

This section introduces aspects that may help facilitate a better understanding of the disclosure. Accordingly, the statements of this section are to be read in this light and are not to be understood as admissions about what is prior art or what is not prior art.

Fiber-optic transmission probes are often used to measure in situ the concentration of analytes in solutions. Since the absorbance measurement is based on Beer's Law, the pathlength of the probe must be in a suitable range to allow measurement of the desired concentrations while staying within the linear absorbance range of the instrument. That means that frequently to cover all the concentrations of interest, one needs multiple pathlengths. Current fiber-optic transmission probes fall into one of two categories. They either have a fixed pathlength or they use interchangeable tips, each providing a different, fixed pathlength. That means one must have either (i) individual fixed-path length probes of all the required pathlengths or (ii) an interchangeable-tip probe with all the required pathlength tips. The length of the tip is selected so that, when the tip is fully threaded on the probe, the gap between the end of the probe body and the reflecting element on the tip is half the desired pathlength.

### SUMMARY

Problems in the prior art are addressed in accordance with the principles of the present disclosure by a fiber-optic transmission probe system having a single probe, a single probe tip, and a number of pathlength adjusters of different lengths, each of which can be configured with the probe and the probe tip to achieve a different probe assembly having a different, desired optical pathlength.

### BRIEF DESCRIPTION OF THE DRAWINGS

Embodiments of the disclosure will become more fully apparent from the following detailed description, the appended claims, and the accompanying drawings in which like reference numerals identify similar or identical elements.
FIG. 1 is a cross-sectional side view of the distal end of a fiber-optic transmission probe, according to certain embodiments of the present disclosure;
FIG. 2 is a cross-sectional side view of a probe tip for the probe of FIG. 1, according to certain embodiments of the disclosure;
FIG. 3 is a cross-sectional side view of a first probe assembly comprising the probe of FIG. 1 with the probe tip of FIG. 2;
FIG. 4 is a cross-sectional side view of a second probe assembly comprising the probe of FIG. 1 with (i) a first, tapped pathlength adjuster fully engaged onto the threaded end of the probe 100 and (ii) the probe tip of FIG. 2 partially engaged onto the threaded end of the probe, according to certain embodiments of the disclosure;
FIG. 5 is a cross-sectional side view of a third probe assembly comprising the probe of FIG. 1 with (i) a second, tapped pathlength adjuster fully engaged onto the threaded end of the probe and (ii) the probe tip of FIG. 2 partially engaged onto the threaded end of the probe, according to certain embodiments of the disclosure;
FIG. 6 is a cross-sectional side view of a fourth probe assembly comprising the probe of FIG. 1 with (i) a first, untapped pathlength adjuster fully engaged onto the threaded end of the probe and (ii) the probe tip of FIG. 2 partially engaged onto the threaded end of the probe, according to certain embodiments of the disclosure;
FIG. 7 is a cross-sectional side view of a fifth probe assembly comprising the probe of FIG. 1 with (i) a second, untapped pathlength adjuster fully engaged onto the threaded end of the probe and (ii) the probe tip of FIG. 2 partially engaged onto the threaded end of the probe, according to certain embodiments of the disclosure;
FIG. 8 is a perspective view of a first, split pathlength adjuster that can be configured with the probe of FIG. 1 and the probe tip of FIG. 2 to achieve a sixth probe assembly, according to certain embodiments of the disclosure;
FIG. 9 is a perspective view of a second, split pathlength adjuster that can be configured with the probe of FIG. 1 and the probe tip of FIG. 2 to achieve a seventh probe assembly, according to certain embodiments of the disclosure; and
FIG. 10 is a front view of a dissolution testing system having an instance of a probe assembly of the present disclosure positioned within each test vessel.

### DETAILED DESCRIPTION

Detailed illustrative embodiments of the present disclosure are disclosed herein. However, specific structural and functional details disclosed herein are merely representative for purposes of describing example embodiments of the present disclosure. The present disclosure may be embodied in many alternate forms and should not be construed as limited to only the embodiments set forth herein. Further, the terminology used herein is for the purpose of describing particular embodiments only and is not intended to be limiting of example embodiments of the disclosure.

As used herein, the singular forms "a," "an," and "the," are intended to include the plural forms as well, unless the context clearly indicates otherwise. It further will be understood that the terms "comprises," "comprising," "contains," "containing," "includes," and/or "including," specify the presence of stated features, steps, or components, but do not preclude the presence or addition of one or more other features, steps, or components. It also should be noted that in some alternative implementations, the functions/acts noted may occur out of the order noted in the figures. For example, two figures shown in succession may in fact be executed substantially concurrently or may sometimes be executed in the reverse order, depending upon the functions/acts involved.

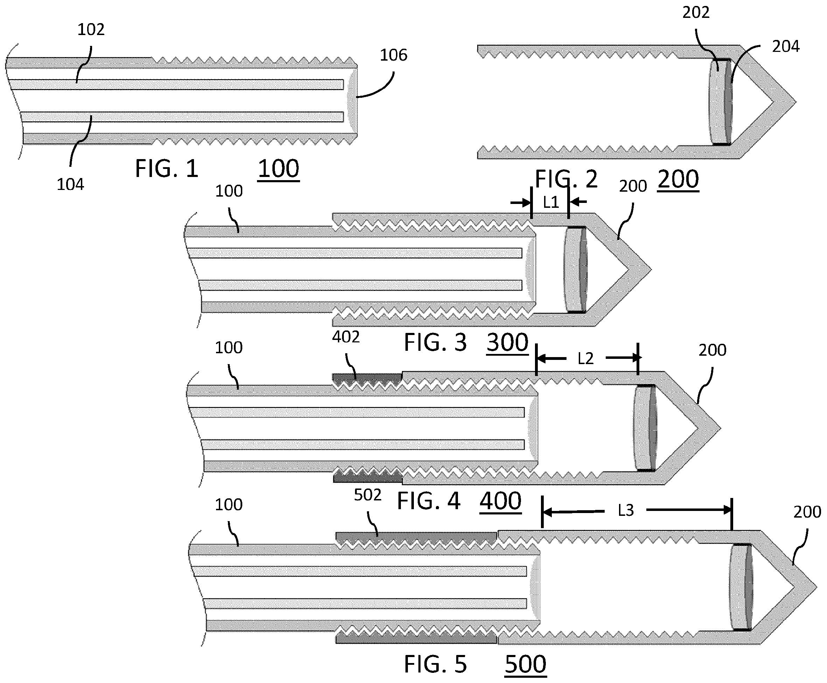

FIG. 1 is a cross-sectional side view of the distal end of a fiber-optic transmission probe 100, according to certain embodiments of the present disclosure. As shown in FIG. 1, probe 100 has input and output optical fibers 102 and 104 and lens 106. As represented in FIG. 1, the outer surface of the end of the probe 100 is threaded.

FIG. 2 is a cross-sectional side view of a probe tip 200 for the probe 100 of FIG. 1, according to certain embodiments of the disclosure. As shown in FIG. 2, probe tip 200 has mirror 202 with mirror coating 204. As represented in FIG. 2, the inner surface of the end of probe tip 200 is tapped to correspond with the threading of the probe 100.

FIG. 3 is a cross-sectional side view of a first probe assembly 300 comprising the probe 100 of FIG. 1 with the probe tip 200 of FIG. 2 fully engaged onto the threaded end of the probe 100 to achieve a first optical pathlength 2*L1.

FIG. 4 is a cross-sectional side view of a second probe assembly 400 comprising the probe 100 of FIG. 1 with (i) a first, tapped pathlength adjuster 402 fully engaged onto the threaded end of the probe 100 and (ii) the probe tip 200 of FIG. 2 partially engaged onto the threaded end of the probe 100 to achieve a second optical pathlength 2*L2 longer than the first optical pathlength 2*L1, according to certain embodiments of the disclosure.

FIG. 5 is a cross-sectional side view of a third probe assembly 500 comprising the probe 100 of FIG. 1 with (i) a second, tapped pathlength adjuster 502 (longer than the first pathlength adjuster 402 of FIG. 4) fully engaged onto the threaded end of the probe 100 and (ii) the probe tip 200 of FIG. 2 partially engaged onto the threaded end of the probe 100 to achieve a third optical pathlength 2*L3 longer than the second optical pathlength 2*L2, according to certain embodiments of the disclosure.

The probe 100 of FIG. 1, the probe tip 200 of FIG. 2, the pathlength adjuster 402 of FIG. 4, and the pathlength adjuster 502 of FIG. 5 are part of a variable-pathlength, fiber-optic transmission probe system according to the present disclosure that can be used to achieve the different probe assemblies 300, 400, and 500. Those skilled in the art will understand that transmission probe systems according to the present disclosure can have any suitable number of pathlength adjusters of different, suitable lengths to achieve different, desired optical pathlengths.

Although the disclosure has been described in the context of probe systems having tapped pathlength adjusters, the disclosure is not so limited. For example, alternative probe systems of the disclosure have other types of pathlength adjusters, such as untapped pathlength adjusters and split pathlength adjusters.

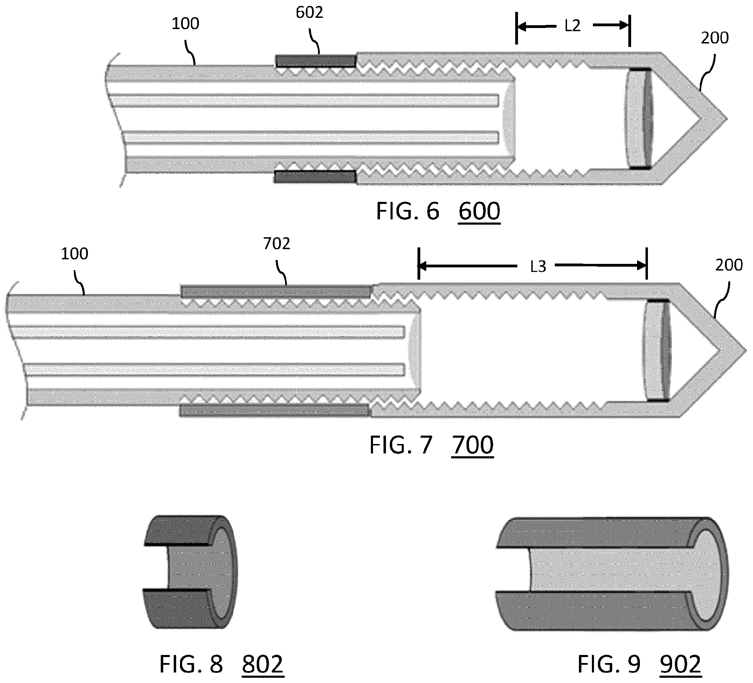

FIG. 6 is a cross-sectional side view of a fourth probe assembly 600 comprising the probe 100 of FIG. 1 with (i) a first, untapped pathlength adjuster 602 fully engaged onto the threaded end of the probe 100 and (ii) the probe tip 200 of FIG. 2 partially engaged onto the threaded end of the probe 100 to achieve the same second optical pathlength 2*L2 as in the second probe assembly 400 of FIG. 4, according to certain embodiments of the disclosure.

FIG. 7 is a cross-sectional side view of a fifth probe assembly 700 comprising the probe 100 of FIG. 1 with (i) a second, untapped pathlength adjuster 702 fully engaged onto the threaded end of the probe 100 and (ii) the probe tip 200 of FIG. 2 partially engaged onto the threaded end of the probe 100 to achieve the same third optical pathlength 2*L3 as in the third probe assembly 500 of FIG. 5, according to certain embodiments of the disclosure.

FIG. 8 is a perspective view of a first, split pathlength adjuster 802 that can be configured with the probe 100 of FIG. 1 and the probe tip 200 of FIG. 2 to achieve a sixth probe assembly having the same second optical pathlength 2*L2 as in the second probe assembly 400 of FIG. 4, according to certain embodiments of the disclosure. In this case, the split pathlength adjuster 802 is flexible enough to be pressed onto the exposed threaded end of the probe 100 without having to fully remove the probe tip 200.

FIG. 9 is a perspective view of a second, split pathlength adjuster 902 that can be configured with the probe 100 of FIG. 1 and the probe tip 200 of FIG. 2 to achieve a seventh probe assembly having the same third optical pathlength 2*L3 as in the third probe assembly 500 of FIG. 5, according to certain embodiments of the disclosure. Here, too, the split pathlength adjuster 902 is flexible enough to be pressed onto the exposed threaded end of the probe 100 without having to fully remove the probe tip 200.

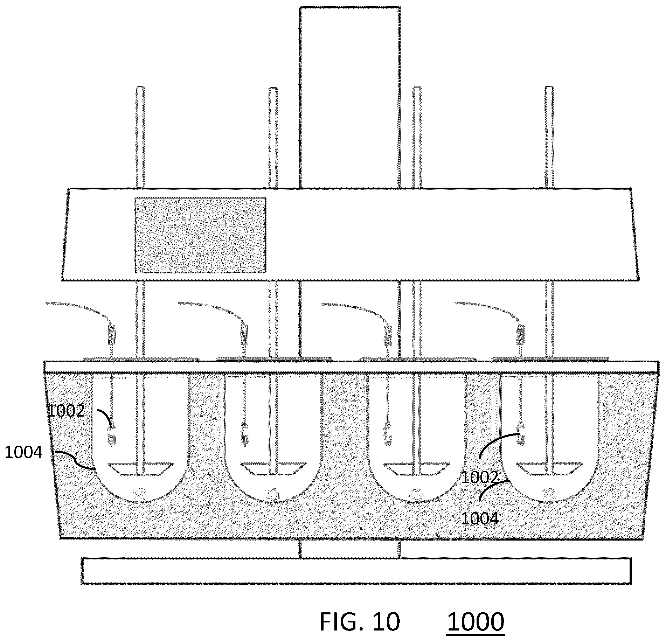

FIG. 10 is a front view of a dissolution testing system 1000 having an instance of a probe assembly 1002 of the present disclosure positioned within each test vessel 1004.

Depending on the implementation, pathlength adjusters of the present disclosure can be made of any suitable material such as stainless steel or plastic.

In certain embodiments, the present disclosure is a fiber-optic transmission probe system comprising a probe having a threaded end, a tapped probe tip, and a number of pathlength adjusters of different lengths. The transmission probe system is usable to assemble (1) a first probe assembly comprising the tapped probe tip fully engaged onto the threaded end of the probe to provide the first probe assembly with a first optical pathlength; (2) a second probe assembly comprising (i) a first pathlength adjuster fully engaged onto the threaded end of the probe and (ii) the tapped probe tip partially engaged onto the threaded end of the probe to provide the second probe assembly with a second optical pathlength longer than the first optical pathlength; and (3) a third probe assembly comprising (i) a second pathlength adjuster, longer than the first pathlength adjuster, fully engaged onto the threaded end of the probe and (ii) the tapped probe tip partially engaged onto the threaded end of the probe to provide the third probe assembly with a third optical pathlength longer than the second optical pathlength.

In at least some of the above embodiments, at least one of the pathlength adjusters is tapped to correspond with the threaded end of the probe.

In at least some of the above embodiments, at least one of the pathlength adjusters is untapped.

In at least some of the above embodiments, at least one of the pathlength adjusters is a split pathlength adjuster.

In at least some of the above embodiments, the apparatus further comprises a dissolution testing system comprising at least one of the probe assemblies.

In certain embodiments, the present disclosure is a method of analyzing a solution using the second probe assembly. The method comprises assembling the second probe assembly and using the second probe assembly to analyze the solution.

In at least some of the above embodiments, the method further comprises assembling the third probe assembly and using the third probe assembly to analyze the solution.

In at least some of the above embodiments, the second probe assembly is attached to a dissolution testing system used to perform dissolution testing on the solution.

In at least some of the above embodiments, the third probe assembly is attached to a dissolution testing system used to perform dissolution testing on the solution.

Unless explicitly stated otherwise, each numerical value and range should be interpreted as being approximate as if the word "about" or "approximately" preceded the value or range.

The use of figure numbers and/or figure reference labels in the claims is intended to identify one or more possible embodiments of the claimed subject matter in order to facilitate the interpretation of the claims. Such use is not to be construed as necessarily limiting the scope of those claims to the embodiments shown in the corresponding figures.

Reference herein to "one embodiment" or "an embodiment" means that a particular feature, structure, or characteristic described in connection with the embodiment can be included in at least one embodiment of the disclosure. The appearances of the phrase "in one embodiment" in various places in the specification are not necessarily all referring to the same embodiment, nor are separate or alternative embodiments necessarily mutually exclusive of other embodiments. The same applies to the term "implementation."

Unless otherwise specified herein, the use of the ordinal adjectives "first," "second," "third," etc., to refer to an object of a plurality of like objects merely indicates that different instances of such like objects are being referred to, and is not intended to imply that the like objects so referred-to have to be in a corresponding order or sequence, either temporally, spatially, in ranking, or in any other manner.

Also, for purposes of this description, the terms "couple," "coupling," "coupled," "connect," "connecting," or "connected" refer to any manner known in the art or later developed in which energy is allowed to be transferred between two or more elements, and the interposition of one or more additional elements is contemplated, although not required. Conversely, the terms "directly coupled," "directly connected," etc., imply the absence of such additional elements. The same type of distinction applies to the use of terms "attached" and "directly attached," as applied to a description of a physical structure. For example, a relatively thin layer of adhesive or other suitable binder can be used to implement such "direct attachment" of the two corresponding components in such physical structure.

The described embodiments are to be considered in all respects as only illustrative and not restrictive. In particular, the scope of the disclosure is indicated by the appended claims rather than by the description and figures herein. All changes that come within the meaning and range of equivalency of the claims are to be embraced within their scope.

In this specification including any claims, the term "each" may be used to refer to one or more specified characteristics of a plurality of previously recited elements or steps. When used with the open-ended term "comprising," the recitation of the term "each" does not exclude additional, unrecited elements or steps. Thus, it will be understood that an apparatus may have additional, unrecited elements and a method may have additional, unrecited steps, where the additional, unrecited elements or steps do not have the one or more specified characteristics.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements. For example, the phrases "at least one of A and B" and "at least one of A or B" are both to be interpreted to have the same meaning, encompassing the following three possibilities: 1- only A; 2- only B; 3- both A and B.

All documents mentioned herein are hereby incorporated by reference in their entirety or alternatively to provide the disclosure for which they were specifically relied upon.

The embodiments covered by the claims in this application are limited to embodiments that (1) are enabled by this specification and (2) correspond to statutory subject matter. Non-enabled embodiments and embodiments that correspond to non-statutory subject matter are explicitly disclaimed even if they fall within the scope of the claims.

As used herein and in the claims, the term "provide" with respect to an apparatus or with respect to a system, device, or component encompasses designing or fabricating the apparatus, system, device, or component; causing the apparatus, system, device, or component to be designed or fabricated; and/or obtaining the apparatus, system, device, or component by purchase, lease, rental, or other contractual arrangement.

While preferred embodiments of the disclosure have been shown and described herein, it will be obvious to those skilled in the art that such embodiments are provided by way of example only. Numerous variations, changes, and substitutions will now occur to those skilled in the art without departing from the disclosure. It should be understood that various alternatives to the embodiments of the disclosure described herein may be employed in practicing the technology of the disclosure. It is intended that the following claims define the scope of the invention and that methods and structures within the scope of these claims and their equivalents be covered thereby.

## Claims

1. Apparatus (300, 400, 500, 600, 700, 1000) comprising a fiber-optic transmission probe system (300, 400, 500, 600, 700) comprising:
a probe (100) having a threaded end,
a tapped probe tip (200), and
a number of pathlength adjusters (402, 502, 602, 702, 802, 902 of different lengths, wherein the transmission probe system (300, 400, 500, 600, 700) is usable to assemble:
a first probe assembly (300) comprising the tapped probe tip (200) fully engaged onto the threaded end of the probe (100) to provide the first probe assembly (300) with a first optical pathlength (L1);
a second probe assembly (400, 600) comprising (i) a first pathlength adjuster (402, 602, 802) fully engaged onto the threaded end of the probe (100) and (ii) the tapped probe tip (200) partially engaged onto the threaded end of the probe (100) to provide the second probe assembly (400, 600) with a second optical pathlength (L2) longer than the first optical pathlength (L1); and
a third probe assembly (500, 700) comprising (i) a second pathlength adjuster (502, 702, 902), longer than the first pathlength adjuster (402, 602, 802), fully engaged onto the threaded end of the probe (100) and (ii) the tapped probe tip (200) partially engaged onto the threaded end of the probe (100) to provide the third probe assembly (500, 700) with a third optical pathlength (L3) longer than the second optical pathlength (L2).

2. The apparatus of claim 1, wherein at least one of the pathlength adjusters (402, 502) is tapped to correspond with the threaded end of the probe (100).

3. The apparatus of claim 1, wherein at least one of the pathlength adjusters (602, 702, 802, 902) is untapped.

4. The apparatus of any of claims 1 and 3, wherein at least one of the pathlength adjusters (802, 902) is a split pathlength adjuster.

5. The apparatus of any of claims 1-4, further comprising a dissolution testing system (1000) comprising at least one of the probe assemblies (300, 400, 500, 600, 700).

6. A method of analyzing a solution using the second probe assembly (400, 600) of claim 1, the method comprising:
assembling the second probe assembly (400, 600); and
using the second probe assembly (400, 600) to analyze the solution.

7. The method of claim 6, further comprising:
assembling the third probe assembly (500, 700); and
using the third probe assembly (500, 700) to analyze the solution.

8. The method of claim 7, wherein the third probe assembly (500, 700) is attached to a dissolution testing system (1000) used to perform dissolution testing on the solution.

9. The method of any of claims 6-8, wherein the second probe assembly (400, 600) is attached to a dissolution testing system (1000) used to perform dissolution testing on the solution.
